# EUROPEAN PATENT SPECIFICATION

(11) **EP 2 927 365 B1**
(45) Date of publication and mention of the grant of the patent: **19.10.2016**
(21) Application number: 14162964.2
(22) Date of filing: 31.03.2014
(51) Int. Cl.: D06F 58/28

(54) **Laundry drying method and apparatus for implementing same**
Wäschetrocknungsverfahren und Wäschetrockner zur Durchführung desselben
Procédé de séchage de blanchisserie et sèche-linge pour le réaliser

(43) Date of publication of application: 07.10.2015
(73) Proprietor: Electrolux Appliances Aktiebolag, 105 45 Stockholm (SE)
(72) Inventor: Girotto, Terenzio, 33080 Porcia (PN) (IT); Contarini, Andrea, 33080 Porcia (PN) (IT); Viero, Massimo, 33080 Porcia (PN) (IT)
(74) Representative: Petruccelli, Davide

(56) References cited:
- EP-A1- 2 333 149
- EP-A2- 0 106 646
- WO-A1-2010/054996
- DE-A1- 2 742 953
- DE-A1- 19 939 274
- US-A- 5 347 727

## Description

The invention relates to a method of controlling a drying process in a laundry drying apparatus and a laundry drying apparatus that consider temperature states for determining the drying progress and/or laundry dryness progress or dryness state.

EP 2 333 149 A1 suggests a heat pump tumble dryer in which the ambient temperature is detected or estimated. Depending on the ambient temperature the drying process is controlled by adapting the drying time or by determining the residual humidity for drying termination or checking the clogging degree of a fluff filter. The ambient temperature is detected with a separate sensor exclusively in thermal contact with the ambient (air) or is detected with a sensor in thermal contact with the refrigerant between throttle element and evaporator or between evaporator and compressor. In the latter case the ambient temperature detection is valid only when the heat pump system had enough time to cool down to ambient temperature.

Document EP-A2-0106646 discloses a method of controlling a drying process as well as a laundry drying apparatus for implementing same, wherein said laundry drying apparatus comprises a cabinet which houses the drying apparatus components, a laundry treatment chamber for drying laundry, a process air circulation arrangement for circulating process air through the treatment chamber, wherein the process air is guided in a process air channel from a treatment chamber outlet to a treatment chamber inlet such that the treatment chamber and the process air channel form a process air loop, a first temperature detector unit adapted to detect a first temperature state indicative of the ambient temperature being ambient to the drying apparatus, a second temperature detector unit adapted to detect a second temperature state indicative of the operation temperature of the drying apparatus, and a control unit adapted to control at least one drying operation of the drying apparatus, wherein the control unit is adapted to detect said first temperature state and said second temperature state in order to determine the degree of dryness of a load of clothes.

It is an object of the invention to provide an improved laundry drying apparatus and method of laundry drying in which the drying energy consumption and/or drying result are improved using a simple detection arrangement.

The invention is defined in claims 1 and 8, respectively. Particular embodiments are set out in the dependent claims.

According to claim 1 a method of controlling a drying process in a laundry drying apparatus is provided. The drying apparatus is for example a dryer or specifically a washer dryer. The drying apparatus may be a heat-pump type dryer or may have such drying function in which the process air is heated by a condenser (or second heat exchanger) and is cooled for water condensation at an evaporator (or first heat exchanger). Instead of a heat pump system a condenser (e.g. a water spray condensing or a process air / ambient air heat exchanger) and a heater (e.g. electrical heater) may be provided in a condenser-type drying apparatus).

The drying apparatus comprises a cabinet, which houses the drying apparatus components, and a laundry treatment chamber for drying laundry therein. The laundry treatment chamber is e.g. a vessel or container for receiving the laundry to be dried, In the treatment chamber the laundry is loaded/unloaded through a loading opening and has at least one inlet opening for passing process air into the chamber interior therethrough and at least one outlet opening for passing process air out of the chamber, wherein the one or more inlets and outlet openings may have double function for passing the process air in and out of the chamber. Preferably the laundry treatment chamber is a drum rotatably supported and driven by a drum motor.

In the apparatus a process air circulation arrangement is provided for circulating process air through the laundry treatment chamber, wherein the process air is guided in a process air channel from a treatment chamber outlet (formed e.g. by the one or more outlet openings) to a treatment chamber inlet (formed e.g. by the one or more inlet openings) such that the treatment chamber and the process air channel form a process air loop in which the process air is repeatedly or steadily circulated (at least in time phases of the drying operation). Preferably the heater (e.g. electrical or condenser or second heat exchanger) and/or the condenser (air/air or first heat exchanger) are arranged in the process air channel.

The apparatus further comprises a first temperature detector unit adapted to detect a first temperature state indicative of the ambient temperature being ambient to the drying apparatus or drying apparatus cabinet. The temperature of the ambient or surrounding or environment in which the drying apparatus is placed has significant influence on the drying efficiency and/or drying time and/or drying result. E.g. the operation efficiency of a heat pump system is affected and directly influenced by the ambient temperature and/or the ambient temperature affects a parameter detected by a sensor or detector. In the following temperature states 'cold', 'normal' and 'hot' are used as an example which mean temperature ranges, for example the 'cold' ambient temperature is below 16°C, the 'normal' ambient temperature is in the range ≥ 16°C and below 29°C, and the 'hot' ambient temperature is ≥ 29°C. The indicated T-values are an example and may have other values. Moreover the ambient temperature states may be represented by finer temperature ranges (e.g. five ranges like very cold/cold/normal/hot/very hot) or only two ranges (e.g. cold/hot) or may be represented by a continuous temperature value.

A second temperature detector unit of the apparatus is adapted to detect a second temperature state indicative of the operation temperature of the drying apparatus. Preferably and as the inventors became aware, in the method and apparatus herein, for operating the apparatus and having a good selection and/or adaptation of the drying operation, the operation temperature state can be more relevant than the actually detected operation temperature. If for example the apparatus is located in a (permanently or temporally) 'hot' ambient temperature environment, the operation temperature may be high although the apparatus has not been or not for a longer period operated before. On the other hand the operation temperature detected directly with a temperature sensor may indicate a 'cold' operation temperature when the apparatus is located in a cold ambient temperature environment although the machine was operated for a longer time and the apparatus components as such are 'hot' (e.g. drum temperature, compressor temperature).

The method executed on the apparatus comprises the steps of: detecting the first temperature and the second temperature states and selecting a first laundry dryness control routine or a second dryness control routine in dependency of the detected first and second temperature states. The first and second dryness control routines are different of each other and are selected using the first and second temperature states such that energy consumption and/or drying result that can be achieved under the given first and second temperature states are optimized. Of course in an embodiment more than the first and second dryness control routines may be selected to further and more precisely optimize the drying operation depending on the detected first and second temperature states. After selection of the control routine, the method (the control unit) executes the control routine for drying the laundry in the treatment chamber according to the selected one of the first or second laundry dryness control routines. The 'laundry dryness control routine' can also be understood or is a 'laundry treatment control routine'.

In the method, a first operation parameter or a first operation parameter set used for controlling the laundry dryness according to the first laundry dryness control routine is different from a second operation parameter or a second operation parameter set used for controlling laundry dryness according to the second laundry dryness control routine.

Under specific ambient and/or operation temperature conditions a single or standard laundry dryness control routine would result in high energy consumption or in a laundry dryness state that is not the targeted one (for example 'cupboard dry', 'iron dry', 'damp' as selected by the user). The laundry may become over-dried or is wet at the end of the drying operation even if 'cupboard dry' was selected. Thus at least two different dryness control routines are provided to cope with the situation created by the different ambient and/or operation temperature states.

The above and the following embodiments are fully applicable for laundry drying apparatus as such under the control of its control unit.

According to an embodiment, the first laundry dryness control routine is based or is essentially based on a detected laundry humidity or an estimated laundry humidity. In one embodiment the laundry humidity may be detected with a humidity detector, e.g. a conductivity sensor or other sensor that detects the laundry humidity by a parameter that directly depends on the water bound in the laundry. Under specific ambient temperature and/or operation temperature conditions the humidity detector may provide signals that are no longer reliable or are no longer reliable alone without considering another parameter. The under this situation the method/control unit selects a laundry dryness control routine that does not rely, essentially rely or only rely on the detected laundry humidity signal. Preferably a drying apparatus having a humidity sensor is a dryer having no washing function, e.g. the laundry drying apparatus is no washer dryer.

In the preferred application of the method or the preferred apparatus is a washer dryer (washing machine having drying function) or a dryer in which no humidity sensor is provided. The method is advantageously applied in a laundry drying apparatus that does not have a humidity detector that detects humidity of the laundry by directly measuring a humidity-related parameter of the laundry (e.g. a conductivity sensor that comes in contact with the laundry surface). In such case the humidity has to be estimated, in particular when the apparatus provides a user selection for at least two of the following humidities: cupboard-dry, ironing-dry, damp. In an embodiment the humidity is estimated at the beginning (in the beginning period) of the drying operation preferably in a way that the residual humidity is estimated. Alternatively or additionally the humidity is estimated (repeatedly, periodically or permanently) during a drying operation. In particular the first and second laundry dryness control routine can differentiate in the parameter that one of the routines estimates the laundry dryness at the beginning of the drying operation (such that e.g. an estimated dryness can be predicted over the time of the drying operation (specifically the selected final dryness and/or time to final dryness)) and the other routine provides the humidity estimation during the drying operation time (e.g. to determine when the selected final humidity is achieved).

In an embodiment, the laundry humidity is estimated on the basis of electrical operation parameters detected at components of the drying apparatus and/or temperatures detected at the drying apparatus.

Preferably the second laundry dryness control routine is based or is essentially or partially based on elapsed operation time as a second operation parameter. Preferably in this laundry dryness control routine the amount of laundry and/or the laundry humidity is estimated at the beginning of the drying operation and the current and/or the (target) end humidity is estimated on the basis of the initially estimated humidity using a count-down on time basis and a known or estimated temporal laundry dryness function. According to an embodiment, by the second laundry dryness control routine a drying time is estimated at the start or in a starting period of the drying cycle and the second operation parameter or one of the second operation parameters is the time counted down from the estimated drying time. For example the drying operation is stopped when estimated required drying time is counted to 0 during the running drying operation.

In an embodiment when the second laundry dryness control routine is based or is partially or essentially based on an estimated drying time or another estimated parameter, the estimated parameter/time may be updated and/or corrected and/or interrupted during the drying operation. For example in case the user interrupts intentionally or unintentionally the drying operation (e.g. by opening a laundry loading door) the time countdown may be interrupted. Or in case the drying operation is interrupted or slowed down due to a temperature parameter and/or electrical parameter indicating an overheating (compressor temperature and/or process air inlet temperature and/or motor torque or temperature) a respective correction is made by interrupting or slowing down the countdown.

Preferably the estimated drying function is also selected in dependency of the first and/or second temperature state. For example if the ambient temperature state is low, the drying efficiency is higher than compared to normal ambient temperature as the condensation efficiency at the first heat exchanger is higher than under normal ambient temperature state. Then the estimated drying function implements or simulates a faster drying process. If ambient temperature state is high, the condensation efficiency of the first heat exchanger is low and the heating of the second heat exchanger is limited (e.g. to avoid overheating of the laundry and/or as the compressor is driven with lower power to avoid overheating thereof). Then the estimated drying function over time implements or simulates a slow drying process. Preferably the second laundry dryness control routine is used outside the 'normal' ambient temperature range, while the first laundry dryness control routine is used at normal ambient temperature range and has its strength in terms of low energy consumption and arriving at the targeted residual laundry humidity.

In an embodiment the estimated drying time is estimated on the basis of one or more of the following: a) the electrical operation parameters detected at components of the drying apparatus, b) temperatures detected at the drying apparatus, and c) the latent power of the apparatus. These parameters can be used for example to estimate the laundry load and/or laundry humidity of the laundry in the storing compartment which then can be used for estimating the humidity and/or the drying time

The latent power is the power necessary to evaporate the laundry water, i.e. to dry the laundry. Latent power is directly proportional to a drying rate and can therefore be used in place of the drying rate to determine an end of a drying cycle. By estimating the latent power in the dryer, the condition (i.e. the threshold) for ending the drying cycle may be determined. In general, the latent power can be estimated by computing a flow energy balance that considers all the energy flows across a closed volume. In particular, the latent power of an apparatus may be a function of air temperature at the drum inlet and outlet, drum speed, drum torque, air fan speed and it depends on the structure/operation of the appliance (i.e. the geometry, the materials etc.). Alternatively the latent power may be a function of air temperature at the drum inlet and outlet, the compressor power consumption during the system operation, air fan speed and it depends on the structure/operation of the appliance (i.e. the geometry, the materials etc.).

Preferably the electrical operation parameters for estimating the laundry humidity or drying time or for calculating the latent power are one or more of the following: a) the current and/or voltage and/or torque and/or power consumption of the motor driving the laundry treatment chamber, b) the current and/or voltage and/or torque and/or power consumption of the motor driving the blower for circulating the process air, c) the current and/or voltage and/or torque and/or power consumption of the motor driving the blower for circulating cooling air, d) the power consumed by a heater for heating the process air, and e) the current and/or voltage and/or torque and/or power consumption of the motor driving the compressor of a heat pump system.

In the apparatus preferably the laundry treatment chamber is a drum which is rotatably supported with a rotation axis that is e.g. horizontal or inclined with respect to a horizontal plane. In an embodiment, specifically in case of a dryer without washing function the motor for driving the drum and the blower for conveying the process air and/or for conveying a moisture condenser cooling air is a single motor. In this case the electrical parameter of the motor indicates the respective value for driving at least two of: the drum, the process air blower and the cooling air blower.

According to claim 8 a laundry drying apparatus is provided, in particular in a dryer or in a washer dryer. The drying apparatus comprises: a cabinet which houses the drying apparatus components; a laundry treatment chamber for drying laundry; a process air circulation arrangement for circulating process air through the treatment chamber, wherein the process air is guided in a process air channel from a treatment chamber outlet to a treatment chamber inlet such that the treatment chamber and the process air channel form a process air loop; a first temperature detector unit adapted to detect a first temperature state indicative of the ambient temperature being ambient to the drying apparatus or drying apparatus cabinet; a second temperature detector unit adapted to detect a second temperature state indicative of the operation temperature of the drying apparatus; and a control unit adapted to control at least one drying operation of the drying apparatus. Preferably under the control of the control unit, the operation of the laundry dying apparatus is as described above. In particular the features described in relation to the method and the features described in relation to the drying apparatus can be applied at the apparatus and method individually or in any combination or sub-combination.

The control unit of the drying apparatus is adapted: to detect the first temperature state and the second temperature state; to select a first laundry dryness control routine or a second dryness control routine in dependency of the detected first and second temperature states; and to execute the selected one of the first or second laundry dryness control routines.

Preferably a first operation parameter or a first operation parameter set used for controlling the laundry dryness according to the first laundry dryness control routine by the control unit is different from a second operation parameter or a second operation parameter set used for controlling laundry dryness according to the second laundry dryness control routine by the control unit.

As mentioned before, the following features are applicable to the method and the laundry drying apparatus as well.

In an embodiment the first temperature unit is formed by a first temperature sensor arranged at the treatment chamber inlet. Preferably the process air inlet temperature is detected upstream the laundry treatment compartment. In particular when the measurement of the first temperature is made before the second heat exchanger (e.g. condenser) or heater is started for heating the process air, the inlet temperature is indicative of the ambient temperature. In particular the inlet temperature detected at the inlet and before starting the heater (the condenser or second heat exchanger may here also be denoted 'heater' in this sense) is stored and either the value stored at a previous drying or the currently detected operation temperature (inlet temperature) is used in dependency of the second temperature state. Thereby it is for example excluded that the inlet temperature is high not due to high ambient temperature but due to a high internal temperature (e.g. operation temperature high from a previous drying operation).

In particular the method or the control unit is adapted to a) first detect the second temperature state, and, b) if the apparatus operation temperature is below a predetermined range or below a predetermined value, to then detect or evaluate the first temperature state indicative of the present ambient temperature, and c) if the apparatus operation temperature is above the predetermined range or above the predetermined value to use the last detected first temperature state detected at a time when the second temperature state indicated that the apparatus operation temperature was below the predetermined range or below the predetermined value. Using a previous first temperature state instead of the current first temperature state avoids or disables using a first temperature state that might be obstructed by other influences than the actual ambient temperature situation. Specifically if the drying operation is executed a second time soon after a first drying operation, it may happen that the current first temperature state is affected by the operation temperature, while using the previously detected 'valid' first temperature state is closer to the actual situation as the ambient conditions normally do not change within two consecutive drying operation runs.

When being detected by the first temperature sensor, it is checked whether the detected temperature a) is in a predetermined temperature range, then the method concludes or the control unit is adapted to conclude that the first temperature state indicates a normal ambient temperature range, b) is above the predetermined range, then the method concludes or the control unit is adapted to conclude that the first temperature state indicates a high temperature range, and c) is below the predetermined temperature range, then the method concludes or the control unit is adapted to conclude that the first temperature state indicates a low temperature range.

According to an embodiment the second temperature unit is formed by a or the first temperature sensor arranged at the treatment chamber inlet and a second temperature sensor arranged at the treatment chamber outlet. Preferably the (e.g. calculated or derived) second temperature state indicative of the apparatus operation temperature is a function of the temperatures detected by the first and second sensors. Preferably the process air temperature is respectively detected at an inlet and outlet of the laundry treatment chamber (upstream and downstream the chamber, respectively, in terms of the process air flow in the process air loop). Preferably the function for deriving the second temperature state is the difference between the temperature detected by first temperature sensor and the temperature detected by second temperature sensor

In an embodiment thereof the method concludes or the control unit of the apparatus is adapted to conclude that the apparatus operation temperature a) is low, when the function result is below or is equal to a predetermined value, and b) is high, when the function result is above the predetermined value. As mentioned above a discrimination can be made using more temperature ranges then the 'low' and 'high' (e.g. very low, low, medium, high, very high) or continues values (in °C or equivalent) can be used for determining the operation temperature state.

Preferably the method retrieves or the control unit is adapted to retrieve the decision to use the first or second laundry dryness control routine by reference to a look-up table using the first and second temperature states. However fuzzy logic or the like using empirical data collected before for optimal results can be used.

According to an embodiment the method modifies or the control unit is adapted to modify a pre-drying sub-routine before starting the drying sub-routine during the drying operation in dependency of the first and/or second temperature state.

In a further embodiment the consumption aspect is rated against a safety or machine lifetime/wear aspect. Here the pre-drying sub-routine is a spinning routine, and high speed spinning may reduce lifetime or may come close to component limit in case the apparatus has a high operation temperature at the beginning of the drying operation. For example a previous drying operation was made shortly before. Then the spinning routine is not executed or executed with reduced spinning speed when the second temperature state indicates that the apparatus operation temperature is above a predetermined range or above a predetermined value. If the pre-spinning can be executed, it saves energy by this initial water spinning extraction as compared to water removal using the drying energy of the heated process air. Further drying time is reduced thereby.

Preferably the laundry drying apparatus is a heat-pump type or a condenser type dryer or washer dryer and/or wherein the laundry drying apparatus is a tumble type apparatus having a drum rotatable around a horizontal axis or axis that is inclined to a horizontal plane.

In case of the apparatus being a dryer having no washing function, preferably the drum is part of process air loop having the inlet and outlet for the process air (see above) and otherwise closed side and/or circumferential walls. In case the apparatus is a washer dryer, the tub is part of process air loop and the rotatable drum is arranged therein.

Reference is made in detail to preferred embodiments of the invention, examples of which are illustrated in the accompanying figures, which show:
- Fig. 1: a schematic view of a laundry drying apparatus - here a washer dryer - having a heat pump system,
- Fig. 2: a schematic block diagram of components of the treatment apparatus of Fig. 1,
- Fig. 3: a diagram showing operation temperatures over time,
- Fig. 4: a time diagram showing the drum inlet temperatures under different ambient and operation conditions,
- Fig. 5: a time diagram showing the temperature difference under different ambient and operation conditions,
- Fig. 6: a table representing a decision matrix using different temperature states,
- Fig. 7: a flow diagram for selecting the laundry dryness control routine to be applied during drying operation,
- Fig. 8: a time diagram showing operation parameters over time at a first (cold) drying operation run, and
- Fig. 9: a time diagram showing operation parameters over time at a second (warm) drying operation run.

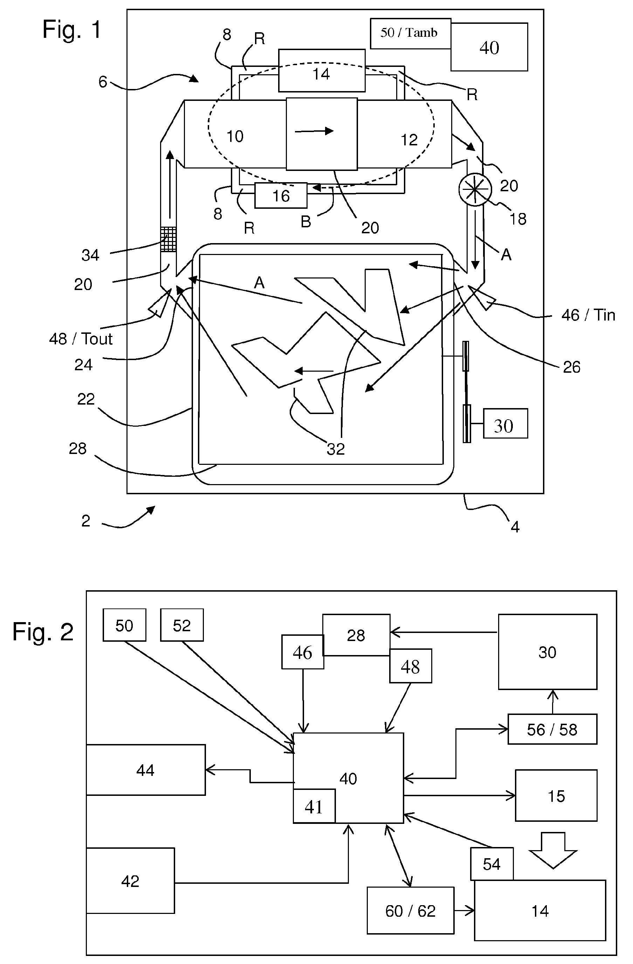

Fig. 1 shows schematically a laundry drying apparatus which here is exemplarily depicted as a washer dryer 2. The components of the washer dryer are arranged in a casing or housing 4. In this embodiment the drying function of the washer dryer is provided by a heat pump system 6 that has a refrigerant loop 8 for circulating the refrigerant as indicated by flow B using refrigerant lines R between the components of system 6. In the refrigerant loop 8 serially arranged are a first heat exchanger 10 (here an evaporator) for cooling the process air and condensing the water taken from the laundry 32, a compressor 14 circulating the refrigerant, a second heat exchanger (condenser) 12 for heating the process air, and an expansion device 16 for expanding the compressed refrigerant into the first heat exchanger 10. Optionally the compressor 14 may be cooled with ambient cooling air sucked in and conveyed by a compressor blower 15 (compare Fig. 2).

Within a process air loop the process air is conveyed as a process air flow A by a blower 18 arranged in a process air channel 20 in which also the first and second heat exchangers 10, 12 are arranged. The process air loop is formed by the process air channel 20 and a tub 22, wherein the process air channel 20 guides the process air exhausted from the tub 22 through: an outlet 24, an optional fluff filter 34, the first heat exchanger 10, the second heat exchanger 12, and back through a process air inlet 26 into the tub 22. Within the tub 22 a rotatable drum 28 is arranged as a laundry compartment receiving the laundry 32. The laundry is loaded/unloaded through drum and tub openings (not shown) covered by a loading door to be opened and closed by a user. The drum 28 is driven by a drum motor 30.

In the embodiment where the laundry drying apparatus is a washer dryer as shown, preferably the motor 30 for driving the drum 28 and the motor for driving the blower 18 are different motors. In case the laundry drying apparatus is a dryer without a washing function, preferably the drum 28 and blower 18 are driven by the same motor 30. In case the laundry drying apparatus is a dryer without washing function, preferably no tub 22 is provided and the process air inlet and outlet are provided on opposite sides of the drum 28, while the drum mantle has no process air inlet or outlet.

Fig. 2 shows a schematic block diagram of components of the laundry dryer/apparatus which provide signal to and/or signals from a control unit 40 controlling the operation of the apparatus 2. The control unit 40 is connected to a storage 41 (like RAM and/or ROM), which is designed to permanently store (e. g. EPROM) data for example for different user selectable programs and program routines as well as memory for temporarily storing data during a program run.

The dryer 2 has an input panel 42 such that the user can select the washing and/or drying program to be used and options for the washing and/or drying program. For example via the input panels 42 the user can select the options cupboard-dry, damp-dry or ironing-dry as the final laundry humidity for a drying program to be executed. A display 44 is provided to indicate different information to the user. For example the program state, the start or interrupt of the program, the time-to-end (TTE) of the running program, the selected options or the like.

The control unit 40 receives temperature signals or values from:
- an optional ambient temperature sensor 50 (Tamb) that may be integrated in or located at the control unit 40 to detect the ambient temperature (additionally to or alternatively to the below described deltaT detection),
- a refrigerant temperature sensor 52 that is arranged at the refrigerant loop, for example at the condenser outlet or the compressor outlet or a sensor located at the capillary between the condenser and evaporator to detect the temperature of the refrigerant (Tr)
- a compressor temperature sensor 54 that indicates the operation temperature (Tc) of the compressor 14, for example the compressor motor temperature,
- further, as also shown in Fig. 1 at the outlet 24 of the tub 22, an outlet temperature sensor 48 is arranged for detecting the temperature (Tout) of the process air at this position, and
- an inlet temperature sensor 46 is arranged at the inlet 26 to detect the inlet temperature (Tin) of the process air at that position.

The drum motor 30 is powered by a drum motor inverter 56 to which a (preferably integrated) drum inverter sensor 58 is associated that send signals related to the operation of the motor 30 and/or inverter 56 to the control unit 40. Signals send form the drum inverter sensor 58 to the control unit 40 are for example one or more of: a motor current, a driving voltage, the power consumed, a motor torque, a power or torque gradient, and a motor or inverter temperature.

Further in this embodiment the compressor motor is powered by a compressor inverter 60 to which a compressor inverter sensor 62 is associated, wherein the sensor 62 may be integrated in or at the compressor inverter 60. The compressor inverter sensor 62 sends signals related to the compressor motor and/or inverter 60 to the control unit 40. The signals are or the signal is one or more of: the motor current, the driving voltage, the consumed power, the motor torque, a gradient of the motor power or torque, and an inverter or compressor motor temperature.

In the following it is described how the apparatus 2 is controlled in decency of at least an ambient temperature state and an operation temperature state to optimize the drying result and/or the energy consumption in reaction to the temperature states. The method or control unit 40 of the apparatus are adapted to cope with machine configurations where no laundry humidity detector is used, for example where no conductivity sensor is provided, can be provided or can not be used due to specific operation conditions. As an example, washer dryers normally have no conductivity sensors for measuring the humidity of the laundry during a drying process. In washer dryers the drum is arranged in a tub such that in combination with the application of washing solutions (detergent) there is no reliable use of a conductivity sensor. Also the method and the control unit are applicable to dryers having no washing function. In such case the humidity detection using for example a conductivity sensor is not used as the sensor somewhat expensive and/or its reliability strongly depends on the temperature (the operation temperature of the apparatus and/or the ambient temperature). Thus the method or control unit herein relies on an estimation of the laundry humidity using one or more operation parameter instead of using the signal of humidity sensor.

It was found that also in the case where no conductivity sensor is used, the estimate for the laundry humidity depends on temperatures. As explained in the following, the inventors became aware that there are inter-relations between the signals of differently positioned sensors. As a solution to such problem the signals of the different sensors can be subjected to a functional treatment to remove (at least partially) the temperature-interdependencies and/or to use different temperatures states (here preferably ambient and operation temperature) to select and execute laundry dryer control routines that cope with the existing temperature states.

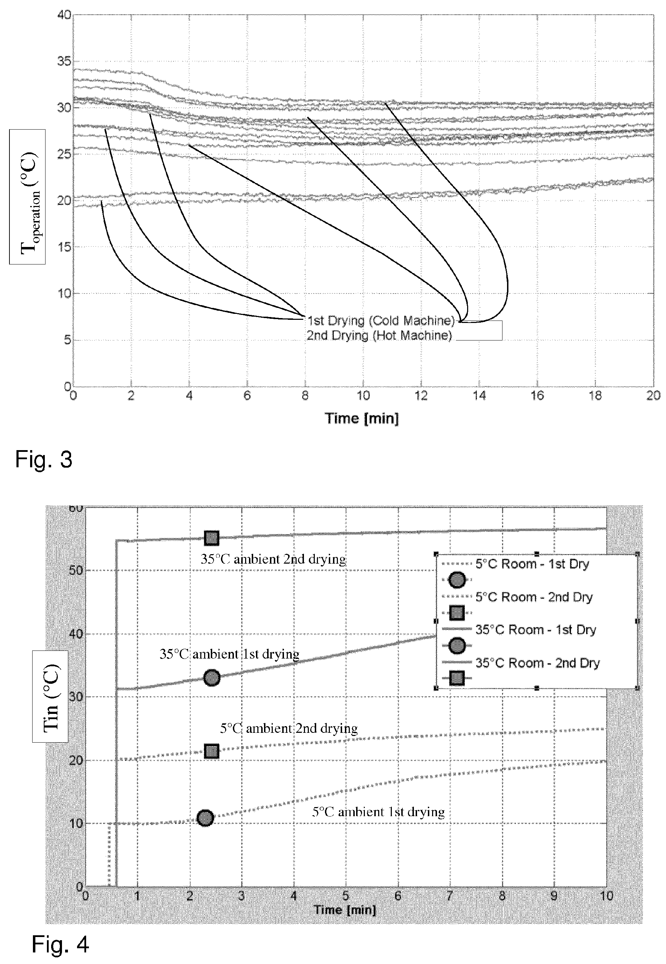

For introducing to a possible temperature situation, Fig. 3 shows the time dependency of the operation temperature (Toperation) detected with a temperature sensor (not shown) located at the wash water heater in the tub 22. For efficiently using a washer-dryer, during the washing operation, the drum 28 is fully loaded with laundry. For improving the drying result in a subsequent drying operation, for example half of the washed laundry load is removed and the other half of the washed laundry load is dried within the drum. During this first drying operation or run the components in contact with the process air heat up (like the tub 22 and the drum 28). If after drying of the first half-load the dried laundry is removed and the previously washed second half of the laundry is loaded, the second drying operation or run starts with the components heated up. For the second run the operation temperature state of the washer dryer 2 is "hot", while it was "cold" at the start of the first drying run.

The temperature curves in Fig. 3 show - as indicated by the connection lines - that the starting operation temperatures in the range of 2 to 4 minutes not only depend on the starting situation in which the first drying run (cold machine) or the second drying run (hot machine) is executed, but also on the ambient temperature. The result of the dependency on the ambient temperature is that the operation temperature at the start of a first drying run at high ambient temperatures can be higher than the starting temperature of a second drying run at cold ambient temperature. In consequence as can be seen from Fig. 3, the operation temperature alone is not adequate to decide whether the operation temperature state of the apparatus 2 is cold (first drying run) or hot (second drying run). It is to be noted that the drying time for drying the same amount of laundry having the same starting humidity is shorter in the first drying run as the water condenser (first heat exchanger) is colder and more efficient and a pre-spinning can be performed at higher spinning speed (explained below).

Fig. 4 shows a similar situation taking the inlet temperature Tin at the inlet 26 of the tub 22 (the drum 30 in case of a dryer without washing function). Here the inlet temperature curves have been recorded for an ambient temperature of 5°C and 35°C, each during the first drying run (cold machine) and second drying run (hot machine). The inlet temperature Tin recorded at a starting phase of the drying procedure (around 2-3 minutes after starting the process air blower 18) at an ambient temperature of 35°C at the first drying run is even higher than the starting temperature at an ambient temperature of 5°C in the second drying run. In consequence it was found, that the inlet temperature Tin is also no convenient parameter to decide whether the operation temperature state of the apparatus 2 is hot or cold.

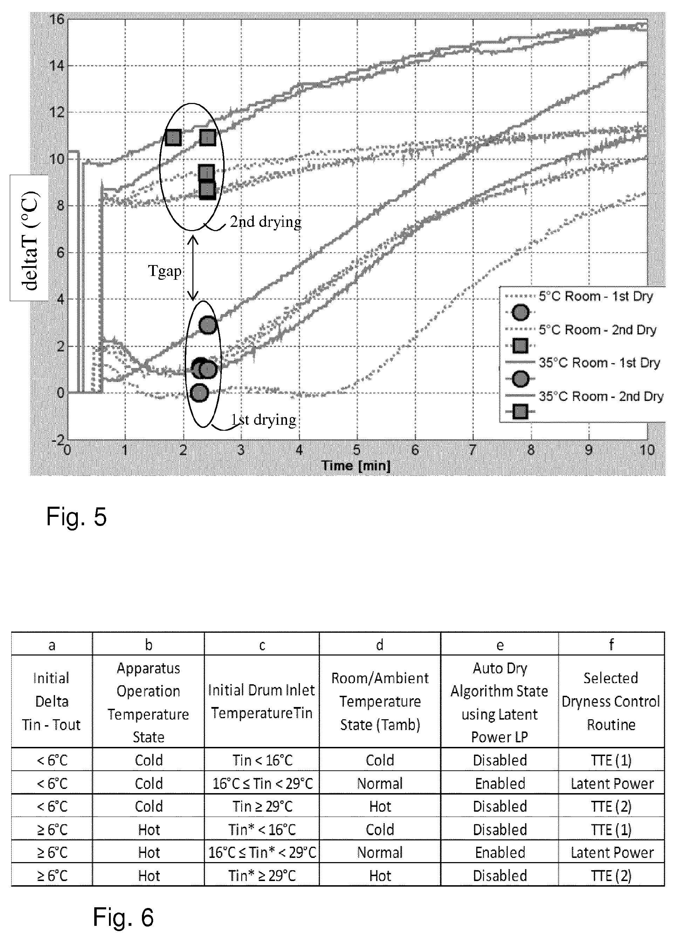

Fig. 5 shows an improvement in determining the operation temperature state of the apparatus 2 by applying a function with two temperatures detected at different positions of the apparatus for creating a relative or normalized parameter. In the shown example the temporal behavior of the function deltaT is shown, wherein the function deltaT is the difference between the inlet temperature Tin and the outlet temperature Tout: deltaT = Tin - Tout. The upper curves of the deltaT have been recorded during a second drying run, i.e. the machine had a hot operation temperature. The lower curves show the function deltaT at a first drying run, i.e. the machine is in a cold operation state. The curves have been recorded at different ambient temperatures (5 and 35°C) using otherwise different operation parameters (laundry load, laundry type, ...). As indicated by the arrow Tgap, there is a sufficiently discriminating gap for the function deltaT (here the difference of Tin - Tout) such that this function of two temperatures detected at two different positions is an adequate measure for determining whether the apparatus operation temperature state is hot or cold.

Actually as shown in the table of Fig. 6, a discrimination is made in dependency of whether the value of the function deltaT is below 6°C or above or equal to 6°C (column a) to decide whether the operation temperature state is hot or cold (column b). The table in Fig. 6 further shows in column c the ranges of the initial drum inlet temperature Tin detected with the sensor 46. The ranges are below 16°C, from 16°C to below 29°C, and from 29°C. These temperature ranges are used to decide (column d) whether the room or ambient temperature state (Tamb) is cold, normal or hot, respectively. For the lower three boxes in column c it has to be noted that the inlet temperature Tin has an asterisk to indicate that under the apparatus temperature state "hot" in column b, not the currently detected inlet temperature Tin (which is detected in the starting phase of the currently running drying operation) is used, but a previously stored initial drum inlet temperature Tin (initial) that was stored in the last previous drying operation where the apparatus operation temperature state was "cold". Column e indicates the disabling or enabling of an auto dry algorithm ('Latent Power') using the latent power as an operation parameter, depending on the apparatus operation temperature state and the ambient temperature state. As a result column f shows which type of laundry dryer control routine is selected for controlling the drying operation (and finally to decide when and on which basis of operation parameters to end the drying operation or cycle).

In the example of the depicted table the selection in dependency of the operation and ambient temperature state is either time to end (TTE) or a Latent Power monitoring procedure (control routine). Other and/or additional laundry dryer control routines can be used. For example two different control routines can be used in case of a cold ambient temperature state and a hot ambient temperature state instead of the one TTE as in the example.

One basic difference between the control routine TTE and Latent Power is that for TTE the time to end is estimated based on the apparatus parameters available in the starting phase of the drying operation while the control routine Latent Power provides that the parameter "latent power LP" is calculated (e.g. repeatedly, periodically or permanently) during the drying operation and is compared to a threshold which determines the end of the drying operation.

The TTE control routine is applied in case of extreme room temperatures (hot/cold - for example close to the allowed operating temperatures of the machine), wherein during the TTE control routing the Latent Power control routine is disabled.

Preferably for determining the starting situation, the operation and ambient temperature state is detected in a starting phase of the drying operation in which preferably one or both of the following applies:
- the compressor 14 has not been started
- the drum 28 is rotated (e. g. at 50 rpm) and the process air blower 18 is on (e. g. at 4000 rpm), both for example for 20, 30, 40 or 50 seconds to e.g. equilibrate the temperature within the process air loop.

During the equilibration of the process air temperature and without activating the heat pump (the 'heater' in case there is no heat pump drying configuration) a temperature drop exist from the inlet 26 to the outlet 24 as the wet laundry absorbs heat energy from the air for evaporating the water from the laundry. As shown above, in a cold operation state of the dryer, the temperature drop is significantly lower than in a hot operation state. In case that an initial spinning operation (e.g. pre-spinning - see below) is performed at the beginning of the drying operation and before starting the drying activity (switching on the heater or compressor), the temperature detection is made after the initial spinning phase.

Preferably the drying time estimated in the TTE control routine at the beginning of the drying is further adapted in dependency of operational parameters. For example an extra duration time is added to the estimated drying time in dependency of the user selected drying state to be achieved (cupboard-dry, damp-dry, ironing-dry). Also in dependency of the ambient temperature state an extra drying time can be added or subtracted (e. g. the drying efficiency is lower in case of hot ambient state).

While the table in Fig. 6 indicates that there is only one Latent Power control routine, actually it may be provided that the Latent Power control routine is adapted according to the operation parameters. For example the threshold value to which the calculated latent power LP is compared depends on the operation temperature state of the apparatus. Additionally or alternatively an additional drying time is added at the end, when the threshold has been exceeded, to achieve the target laundry humidity depending on the user selection (e.g. cupboard-, damp-, or ironing-dry).

Additionally or alternatively for considering the temperature situation close to extreme temperature ranges, the latent power LP calculated can be normalized during the running drying procedure in that the calculated latent power LP is divided by the current maximum value of the latent power LPmax detected during the running drying operation. By this LP(t):LPmax function the normally bell-shaped curve of the current latent power is transformed to a constant value till the maximum value for LPmax of the non-normalized curve has been reached and then the curve is decreasing. Alternatively or additionally in dependency of the user selected final laundry dryness, the threshold for the latent power LP can corrected to be higher or lower. Additionally or alternatively the threshold of the latent power LP can be changed in dependency whether the operation temperature state indicates a cold or hot machine.

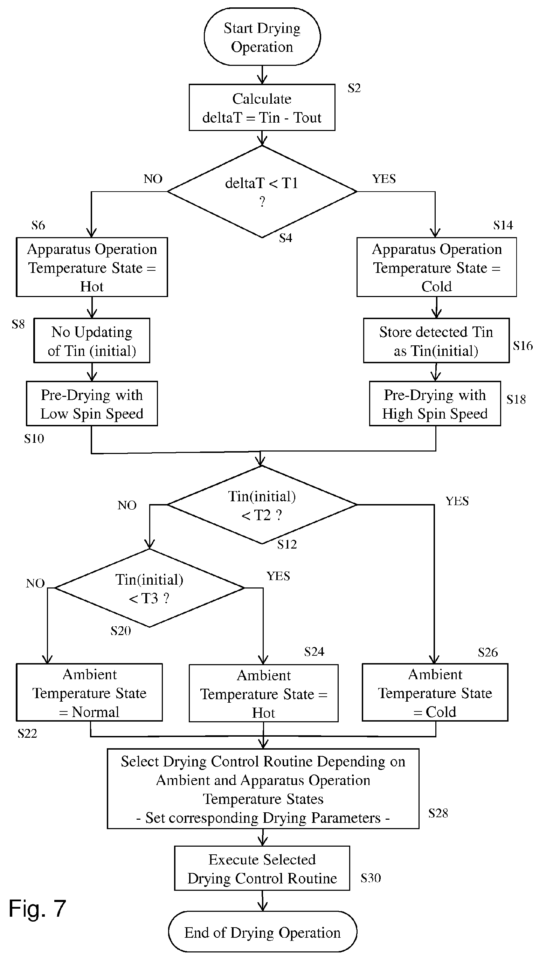

Fig. 7 shows a flow diagram of an exemplary program for selecting the laundry dryness control routine in dependency of the operation and ambient temperature state. After start of the drying operation in step S2 the function deltaT = Tin - Tout is calculated using the detected temperatures as described before (in the starting phase, preferably after the temperature equilibration in the process air loop). In S4 it is checked whether the deltaT is below a first temperature difference threshold T1 (6°C according to the table in Fig. 6). If it is not below the threshold T1 (NO), it is determined or set that the apparatus operation temperature state is Hot in S6. As the state is Hot, in S8 a stored value Tin (initial) is not updated, so that the previously stored value for Tin (initial) is maintained (not overwritten). Further according to S10 it is decided or set that the spinning speed for the drum rotation in the pre-drying phase is low. For example the spinning speed is below 500 rpm during pre-drying. When coming along this branch, as next it is checked whether the previously stored initial inlet temperature Tin (initial) is below a second threshold T2. According to the table of Fig. 6, the threshold T2 is 16°C.

Returning to the decision S4, if the deltaT is lower than the first threshold T1, the procedure continues with S14 where it is determined or set that the apparatus operation temperature state is Cold. Under this condition the currently detected process air inlet temperature Tin is stored as the value Tin (initial) in S16. Further in S18 the value for the spin speed of the drum is set to high so that the drum speed for the pre-drying by drum spinning for water extraction is set to above e. g. 500 rpm. Then the procedure continues in S12.

Returning to S12, if the stored value of Tin (initial) is below the second threshold, it is determined by S26 that the ambient temperature state is Cold. Then the procedure continues with S28. If in S12 the Tin (initial) is not lower than T2, a further differentiation is made in S20, whether the Tin (initial) is lower than a third threshold T3. In case of YES, the procedure continues in S24 where it is determined that the ambient temperature state is Hot. From S24 the procedure continues to S28. If in S20 Tin (initial) is not lower than the third threshold T3, in step S22 it is determined that the ambient temperature state is Normal and the procedure continues with step S28. In the example according to the table of Fig. 6, the threshold T3 is 29°C.

In step S28 the previously determined ambient and apparatus operation temperature states are used to select the laundry dryness control routine - compare for example TTE and Latent Power shown in Fig. 6 and described above. As mentioned before and in dependency of the ambient and apparatus operation temperature states and/or other operation states, additional drying parameters to be applied during the control routines are set. For example additional drying times depended on the user-selected final humidity and/or other corrections depending on detected temperatures and/or electrical parameters may be applied.

According to S30 the selected drying control routine is executed and when the end of the drying operation has been determined (time elapsed in TTE or threshold exceeded in Latent Power routines) the drying operation has finally ended.

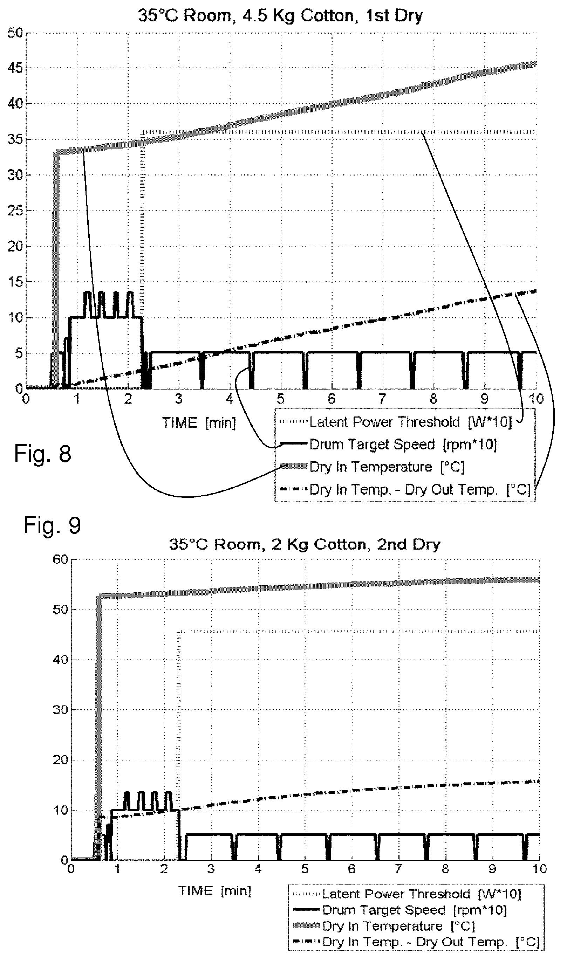

Figs. 8 and 9 show time diagrams with operation parameters development during a first drying (cold machine Fig. 8 - see above S14) and a second drying (hot machine Fig. 9 - see above S6). Both measurements are recorded at 35°C ambient temperature. As mentioned before, in the first drying, when the drying apparatus 2 is cold, the drum rotation speed in the pre-drying phase is higher than for the second drying. In the Figures the pre-drying by spinning is indicated by the higher drum rotation speed in the time of approximately 0.8 to 2.3 minutes. After the pre-drying phase the drum is rotated at tumbling speed (for example between 40 and 50 rpm) with interruptions (rearranging laundry) and the blower 18 is started for the equilibration phase period. Then after some seconds of equilibration, the current values for Tin and Tout are detected to determine the operation and ambient temperature state. If it is determined that the ambient temperature state is normal, then the Latent Power operation routine is used as shown in Figs. 8 and 9. The latent power threshold is respectively indicated by the dotted lines, wherein the latent power threshold for the first drying (about 36 units) is different from the latent power threshold in the second drying (about 45 units).

The latent power LP is permanently calculated after start of the compressor which is started after the equilibration of the process air temperature has been performed for measuring the inlet and outlet temperatures. Figures 8 and 9 also show the inlet temperature overtime and the deltaT overtime which is Tin - Tout.

The latent power LP as used herein is a representative or indication for the power (e.g. the system power consumed during the drying process) necessary to evaporate the laundry water, i.e. to dry the laundry. The latent power is directly proportional to a drying rate and can therefore be used in place of the drying rate to determine an end of a drying cycle. By estimating the latent power in the dryer, the condition (i.e. the threshold) for ending the drying cycle may be determined. In general, the latent power can be estimated by computing a flow energy balance that considers all the energy flows across a closed volume. Simply spoken, if no laundry is in the treatment chamber or the laundry therein is dry, the latent power consumed is constant over time (assuming the other external parameters (ambient temperature)) do not change and the system (in particular the heat pump system) has attained an equilibrium state (e.g. after the warm-up phase). However, if there is water to be removed from the laundry, the latent power depends on the water evaporation rate and/or evaporated water amount and the respective amount of water condensed. In particular, the latent power of an apparatus may be a function of air temperature at the drum inlet and outlet, drum speed, drum torque, air fan speed and it depends on the structure/operation of the appliance (i.e. the geometry, the materials etc.). Alternatively the latent power may be a function of air temperature at the drum inlet and outlet, the compressor power consumption during the system operation, air fan speed and it depends on the structure/operation of the appliance (i.e. the geometry, the materials etc.).

Thus with the above it has been shown that the targeted laundry dryness degree can be achieved without need of providing an apparatus component for detecting the laundry humidity, for example by direct contact and a conductivity sensor. Also it has been shown that even in case of extreme ambient temperatures a control routine may be selected providing reliable drying results. Corrections to the selected control routine may be further considered based on temperature signals and/or motor parameters signals. By simple and cheap temperature sensors and evaluating at least two of the temperature signal a satisfactory determination of temperatures states can be achieved. Internal temperature states are useful for deciding which laundry dryness control routine is to be applied and/or which operation parameters have to be amended or corrected to achieve a satisfactory drying result in terms of targeted humidity, while at the same time energy consumption is reduced where reasonable.

**Reference Numeral List**

| | | | |
|---|---|---|---|
| 2 | heat pump washer dryer | 42 | input panel |
| 4 | casing/ housing | 44 | display |
| 6 | heat pump system | 46 | inlet temperature sensor (Tin) |
| 8 | refrigerant loop | 48 | outlet temperature sensor (Tout) |
| 10 | first heat exchanger (evaporator) | 50 | ambient temperature sensor (Tamb) |
| 12 | second heat exchanger (condenser) | 52 | refrigerant temperature sensor (Tr) |
| 14 | compressor | 54 | compressor temperature sensor (Tc) |
| 15 | compressor blower | 56 | drum inverter |
| 16 | expansion device | 58 | drum inverter sensor (Si) |
| 18 | blower | 60 | compressor inverter |
| 20 | process air channel | 62 | compressor inverter sensor (Sc) |
| 22 | tub | | |
| 24 | outlet | A | process air flow |
| 26 | inlet | B | refrigerant flow |
| 28 | drum (laundry compartment) | R | refrigerant line |
| 30 | drum motor | Tin | inlet temperature |
| 32 | laundry | Tout | outlet temperature |
| 34 | fluff filter | deltaT | = Tin - Tout |
| 40 | control unit | T1, T2, T3 | temperature thresholds |
| 41 | storage | LP | latent power |

## Claims

1. A method of controlling a drying process in a laundry drying apparatus (2), in particular in a dryer or in a washer dryer, wherein the laundry drying apparatus (2) comprises:
a cabinet (4) which houses the drying apparatus components,
a laundry treatment chamber (22, 28) for drying laundry,
a process air circulation arrangement (20, 22) for circulating process air through the treatment chamber (22, 28), wherein the process air is guided in a process air channel (20) from a treatment chamber outlet (24) to a treatment chamber inlet (26) such that the treatment chamber (22, 28) and the process air channel (20) form a process air loop,
a first temperature detector unit (46, 50) adapted to detect a first temperature state (Tin, Tamb) indicative of the ambient temperature being ambient to the laundry drying apparatus (2) or to the drying apparatus cabinet (4), and
a second temperature detector unit (46, 48) adapted to detect a second temperature state (deltaT) indicative of the operation temperature of the laundry drying apparatus (2);
wherein the method is **characterised by** comprising the steps of:
detecting the first and the second temperature states (Tin, Tamb; deltaT),
selecting a first laundry dryness control routine (LP) or a second dryness control routine (TTE) in dependency of the detected first and second temperature states (Tin, Tamb; deltaT), and
drying the laundry in the treatment chamber (22, 28) according to the selected one of the first or second laundry dryness control routines,
wherein a first operation parameter or a first operation parameter set used for controlling the laundry dryness according to the first laundry dryness control routine (LP) is different from a second operation parameter or a second operation parameter set used for controlling laundry dryness according to the second laundry dryness control routine (TTE).

2. Method according to claim 1, wherein the first laundry dryness control routine (LP) is based or is partially or essentially based on a detected laundry humidity or an estimated laundry humidity or a parameter (LP) indicative of an estimated laundry humidity.

3. Method according to claim 2, wherein the laundry humidity or the humidity indicative parameter (LP) is estimated on the basis of electrical operation parameters detected at components of the laundry drying apparatus (2) and/or temperatures detected at components of the laundry drying apparatus (2).

4. Method according to claim 1, 2 or 3, wherein the second laundry dryness control routine (TTE) is based or is essentially or partially based on elapsed operation time as a second operation parameter.

5. Method according to any of the previous claims, wherein in the second laundry dryness control routine (TTE) a drying time is estimated at the start or in a starting period of the drying cycle and a second operation parameter is the time counted down from the estimated drying time.

6. Method according to claim 5, wherein the estimated drying time is estimated on the basis of one or more of the following:
- electrical operation parameters detected at components of the drying apparatus,
- temperatures detected at the drying apparatus, and
- the latent power (LP) of the apparatus.

7. Method according to claim 3 or claim 6 , wherein the electrical operation parameters for estimating the laundry humidity or drying time are or the latent power (LP) is determined based on one or more of the following:
- the current and/or voltage and/or torque and/or power consumption of the motor (30) driving the laundry treatment chamber (22, 28),
- the current and/or voltage and/or torque and/or power consumption of the motor driving the blower (18) for circulating the process air,
- the current and/or voltage and/or torque and/or power consumption of the motor driving the blower (15) for circulating cooling air,
- the power consumed by a heater for heating the process air, and
- the current and/or voltage and/or torque and/or power consumption of the motor driving the compressor (14) of a heat pump system (6).

8. A laundry drying apparatus (2), in particular in a dryer or in a washer dryer, wherein the laundry drying apparatus (2) comprises:
a cabinet (4) which houses the drying apparatus components,
a laundry treatment chamber (22, 28) for drying laundry,
a process air circulation arrangement (20, 22) for circulating process air through the treatment chamber (22, 28), wherein the process air is guided in a process air channel (20) from a treatment chamber outlet (24) to a treatment chamber inlet (26) such that the treatment chamber (22, 28) and the process air channel (20) form a process air loop,
a first temperature detector unit (46, 50) adapted to detect a first temperature state (Tin, Tamb) indicative of the ambient temperature being ambient to the drying apparatus or to the drying apparatus cabinet (4),
a second temperature detector unit (46, 48) adapted to detect a second temperature state (deltaT) indicative of the operation temperature of the laundry drying apparatus (2), and
a control unit (40) adapted to control at least one drying operation of the laundry drying apparatus (2), in particular by applying a control method according to any of the previous claims,
**characterised in that** the control unit (40) is adapted:
to detect the first temperature state (Tin, Tamb) and the second temperature state (deltaT),
to select a first laundry dryness control routine (Latent Power) or a second dryness control routine (TTE) in dependency of the detected first and second temperature states (Tin, Tamb; deltaT),
to execute the selected one of the first or second laundry dryness control routines (LP, TTE).

9. Apparatus according to claim 8, wherein a first operation parameter or a first operation parameter set used for controlling the laundry dryness according to the first laundry dryness control routine (LP) is different from a second operation parameter or a second operation parameter set used for controlling laundry dryness according to the second laundry dryness control routine (TTE).

10. Apparatus according to claim 8 or 9 or method according to any of claims 1 to 7, wherein the first temperature unit (46, 50) is or comprises a first temperature sensor (46) arranged at the treatment chamber inlet (26).

11. Apparatus according to claim 8, 9 or 10 or method according to any of claims 1 to 7 or 10, wherein when the first temperature state (Tin, Tamb) detected by the first temperature detector unit (46, 50)
- is in a predetermined temperature range, the method concludes or the control unit (40) is adapted to conclude that the first temperature state (Tin, Tamb) indicates a normal ambient temperature range,
- is above the predetermined range, the method concludes or the control unit (40) is adapted to conclude that the first temperature state (Tin, Tamb) indicates a high temperature range,
- is below the predetermined temperature range, the method concludes or the control unit (40) is adapted to conclude that the first temperature state (Tin, Tamb) indicates a low temperature range.

12. Apparatus according to any of claims 8 to 11 or method according to any of claims 1 to 7, 10 or 11, wherein the second temperature unit (46, 48) is formed by
a or the first temperature sensor (46) arranged at the treatment chamber inlet (26)
and
a second temperature sensor (48) arranged at the treatment chamber outlet (24), and wherein the second temperature state (deltaT) indicative of the apparatus operation temperature is a function of the temperatures (Tin, Tout) detected by the first and second sensors (46, 48).

13. Apparatus according to claim 12 or method according to claim 12, wherein the method concludes or the control unit (40) is adapted to conclude that the apparatus operation temperature
is low or cold, when the second temperature state (deltaT) is below or is equal to a predetermined value (T1), and
is high or hot, when the second temperature state (deltaT) is above the predetermined value (T1).

14. Apparatus according to any of claims 8 to 13 or method according to any of claims 1 to 7 or 10 to 13, wherein the method retrieves or the control unit (40) is adapted to retrieve the decision to use the first or second laundry dryness control routine (LP, TTE) by reference to a look-up table using the first and second temperature states (Tin, Tamb; deltaT).

15. Apparatus according to any of claims 8 to 14 or method according to any of claims 1 to 7 or 10 to 14, wherein the method modifies or the control unit (40) is adapted to modify or to enable/disable a pre-drying sub-routine before starting the drying sub-routine during the drying operation in dependency of the first and/or second temperature states (Tin, Tamb; deltaT).

16. Apparatus according to any of claims 8 to 15 or method according to any of claims 1 to 7 or 10 to 15, wherein the method or the control unit (40) is adapted to first detect the second temperature state (deltaT), and,
if the second temperature state (deltaT) is below a predetermined range or below a predetermined value (T1), to then detect or evaluate the first temperature state (Tin, Tamb) indicative of the present ambient temperature, and
if the second temperature state (deltaT) is above the predetermined range or above the predetermined value (T1) to use the last detected first temperature state (Tin*) detected at a time when the second temperature state (Tin, Tamb) indicated that the second temperature state (deltaT) was below the predetermined range or below the predetermined value (T1).

17. Apparatus according to any of claims 8 to 16 or method according to any of claims 1 to 7 or 10 to 16,
wherein the first and/or second laundry dryness control routine comprises a drying sub-routine and a or the pre-drying sub-routine being a spinning routine preceding the drying sub-routine,
wherein the pre-drying sub-routine is not executed or executed with reduced spinning speed, when the second temperature state (deltaT) indicates that the apparatus operation temperature is above a predetermined range or above a predetermined value (T1).

18. Apparatus according to any of claims 8 to 17 or method according to any of claims 1 to 7 or 10 to 17,
wherein the laundry drying apparatus (2) is a heat-pump type or a condenser type dryer or washer dryer, and/or
wherein the laundry drying apparatus (2) is a tumble type apparatus having a drum (28) rotatable around a horizontal axis or an axis that is inclined to a horizontal plane.

19. Apparatus according to any of claims 8 to 18 or method according to any of claims 1 to 7 or 10 to 18, wherein the treatment chamber (22, 28) is a tub (22) in which a rotatable drum (28) is arranged or is a rotatable drum (28).

## Patentansprüche

1. Verfahren zum Steuern eines Trocknungsprozesses in einer Wäschetrocknungsvorrichtung (2), insbesondere in einem Trockner oder in einem Waschtrockner, wobei die Wäschetrocknungsvorrichtung (2) Folgendes umfasst:
ein Gehäuse (4), in dem die Trocknungsvorrichtungskomponenten untergebracht sind,
eine Wäschebehandlungskammer (22, 28) zum Trocknen von Wäsche,
eine Prozessluftumwälzungsanordnung (20, 22) zum Umwälzen von Prozessluft in der Behandlungskammer (22, 28), wobei die Prozessluft in einem Prozessluftkanal (20) von einem Behandlungskammerauslass (24) zu einem Behandlungskammereinlass (26) geführt wird, sodass die Behandlungskammer (22, 28) und der Prozessluftkanal (20) einen Prozessluftkreislauf bilden,
eine erste Temperaturdetektoreinheit (46, 50), die angepasst ist, um einen ersten Temperaturzustand (Tin, Tamb) zu detektieren, der die Umgebungstemperatur angibt, die die Wäschetrocknungsvorrichtung (2) oder das Trocknungsvorrichtungsgehäuse (4) umgibt, und
eine zweite Temperaturdetektoreinheit (46, 48), die angepasst ist, um einen zweiten Temperaturzustand (deltaT) zu detektieren, der die Betriebstemperatur der Wäschetrocknungsvorrichtung (2) angibt;
wobei das Verfahren **dadurch gekennzeichnet ist, dass** es folgende Schritte umfasst:
Detektieren des ersten und des zweiten Temperaturzustands (Tin, Tamb; deltaT),
Auswählen einer ersten Wäschetrockenheitssteuerroutine (LP) oder einer zweiten Trockenheitssteuerroutine (TTE) in Abhängigkeit vom detektierten ersten und vom detektierten zweiten Temperaturzustand (Tin, Tamb; deltaT), und
Trocknen der Wäsche in der Behandlungskammer (22, 28) gemäß der ausgewählten ersten oder der ausgewählten zweiten Wäschetrockenheitssteuerroutine,
wobei ein erster Betriebsparameter oder ein erster Betriebsparametersatz, der zum Steuern der Wäschetrockenheit gemäß der ersten Wäschetrockenheitssteuerroutine (LP) verwendet wird, sich von einem zweiten Betriebsparameter oder einem zweiten Betriebsparametersatz, der zum Steuern der Wäschetrockenheit gemäß der zweiten Wäschetrockenheitssteuerroutine (TTE) verwendet wird, unterscheidet.

2. Verfahren nach Anspruch 1, wobei die erste Wäschetrockenheitssteuerroutine (LP) auf einer detektierten Wäschefeuchtigkeit oder einer geschätzten Wäschefeuchtigkeit oder einem Parameter (LP), der eine geschätzte Wäschefeuchtigkeit angibt, basiert oder teilweise oder im Wesentlichen basiert.

3. Verfahren nach Anspruch 2, wobei die Wäschefeuchtigkeit oder der die Feuchtigkeit angebende Parameter (LP) basierend auf Elektrobetriebsparametern, die an Komponenten der Wäschetrocknungsvorrichtung (2) detektiert werden, und/oder Temperaturen, die an Komponenten der Wäschetrocknungsvorrichtung (2) detektiert werden, geschätzt wird.

4. Verfahren nach Anspruch 1, 2 oder 3, wobei die zweite Wäschetrockenheitssteuerroutine (TTE) auf einer verstrichenen Betriebszeit als zweitem Betriebsparameter basiert oder im Wesentlichen oder teilweise basiert.

5. Verfahren nach einem der vorhergehenden Ansprüche, wobei in der zweiten Wäschetrockenheitssteuerroutine (TTE) eine Trocknungszeit am Anfang oder in einem Anfangszeitraum des Trocknungszyklus geschätzt wird und ein zweiter Betriebsparameter die Zeit ist, die von der geschätzten Trocknungszeit abwärts gezählt wird.

6. Verfahren nach Anspruch 5, wobei die geschätzte Trocknungszeit basierend auf Folgendem geschätzt wird:
- Elektrobetriebsparametern, die an Komponenten der Trocknungsvorrichtung detektiert werden, und/oder
- Temperaturen, die an der Trocknungsvorrichtung detektiert werden, und/oder
- der latenten Leistung (LP) der Vorrichtung.

7. Verfahren nach Anspruch 3 oder Anspruch 6, wobei die Elektrobetriebsparameter zum Schätzen der Wäschefeuchtigkeit oder der Trocknungszeit Folgendes sind oder die latente Leistung (LP) basierend auf Folgendem bestimmt wird:
- Strom und/oder Spannung und/oder Drehmoment und/oder Leistungsverbrauch des Motors (30), der die Wäschebehandlungskammer (22, 28) antreibt, und/oder
- Strom und/oder Spannung und/oder Drehmoment und/oder Leistungsverbrauch des Motors, der das Gebläse (18) zum Umwälzen der Prozessluft antreibt, und/oder
- Strom und/oder Spannung und/oder Drehmoment und/oder Leistungsverbrauch des Motors, der das Gebläse (15) zum Umwälzen von Kühlluft antreibt, und/oder
- Leistung, die von einer Heizeinrichtung zum Erhitzen der Prozessluft verbraucht wird, und/oder
- Strom und/oder Spannung und/oder Drehmoment und/oder Leistungsverbrauch des Motors, der den Kompressor (14) eines Wärmepumpensystems (6) antreibt.

8. Wäschetrocknungsvorrichtung (2), insbesondere in einem Trockner oder in einem Waschtrockner, wobei die Wäschetrocknungsvorrichtung (2) Folgendes umfasst:
ein Gehäuse (4), in dem die Trocknungsvorrichtungskomponenten untergebracht sind,
eine Wäschebehandlungskammer (22, 28) zum Trocknen von Wäsche,
eine Prozessluftumwälzungsanordnung (20, 22) zum Umwälzen von Prozessluft in der Behandlungskammer (22, 28), wobei die Prozessluft in einem Prozessluftkanal (20) von einem Behandlungskammerauslass (24) zu einem Behandlungskammereinlass (26) geführt wird, sodass die Behandlungskammer (22, 28) und der Prozessluftkanal (20) einen Prozessluftkreislauf bilden,
eine erste Temperaturdetektoreinheit (46, 50), die angepasst ist, um einen ersten Temperaturzustand (Tin, Tamb) zu detektieren, der die Umgebungstemperatur angibt, die die Trocknungsvorrichtung oder das Trocknungsvorrichtungsgehäuse (4) umgibt,
eine zweite Temperaturdetektoreinheit (46, 48), die angepasst ist, um einen zweiten Temperaturzustand (deltaT) zu detektieren, der die Betriebstemperatur der Wäschetrocknungsvorrichtung (2) angibt, und
eine Steuereinheit (40), die angepasst ist, um mindestens einen Trocknungsvorgang der Wäschetrocknungsvorrichtung (2) zu steuern, insbesondere durch Anwenden eines Steuerverfahrens nach einem der vorhergehenden Ansprüche,
**dadurch gekennzeichnet, dass** die Steuereinheit (40) für Folgendes angepasst ist:
Detektieren des ersten Temperaturzustands (Tin, Tamb) und des zweiten Temperaturzustands (deltaT),
Auswählen einer ersten Wäschetrockenheitssteuerroutine (Latent Power) oder einer zweiten Trockenheitssteuerroutine (TTE) in Abhängigkeit vom detektierten ersten und vom detektierten zweiten Temperaturzustand (Tin, Tamb; deltaT),
Ausführen der ausgewählten ersten oder der ausgewählten zweiten Wäschetrockenheitssteuerroutine (LP, TTE).

9. Vorrichtung nach Anspruch 8, wobei ein erster Betriebsparameter oder ein erster Betriebsparametersatz, der zum Steuern der Wäschetrockenheit gemäß der ersten Wäschetrockenheitssteuerroutine verwendet wird (LP), sich von einem zweiten Betriebsparameter oder einem zweiten Betriebsparametersatz, der zum Steuern der Wäschetrockenheit gemäß der zweiten Wäschetrockenheitssteuerroutine verwendet wird (TTE), unterscheidet.

10. Vorrichtung nach Anspruch 8 oder 9 oder Verfahren nach einem der Ansprüche 1 bis 7, wobei die erste Temperatureinheit (46, 50) ein erster Temperatursensor (46) ist oder einen ersten Temperatursensor (46) umfasst, der am Behandlungskammereinlass (26) angeordnet ist.

11. Vorrichtung nach Anspruch 8, 9 oder 10 oder Verfahren nach einem der Ansprüche 1 bis 7 oder 10, wobei,
wenn der erste Temperaturzustand (Tin, Tamb), der durch die erste Temperaturdetektoreinheit (46, 50) detektiert wird,
- in einem vorbestimmten Temperaturbereich ist, bei dem Verfahren abgeleitet wird oder die Steuereinheit (40) angepasst ist, um abzuleiten, dass der erste Temperaturzustand (Tin, Tamb) einen normalen Umgebungstemperaturbereich angibt,
- über dem vorbestimmten Bereich ist, bei dem Verfahren abgeleitet wird oder die Steuereinheit (40) angepasst ist, um abzuleiten, dass der erste Temperaturzustand (Tin, Tamb) einen hohen Temperaturbereich angibt,
- unter dem vorbestimmten Temperaturbereich ist, bei dem Verfahren abgeleitet wird oder die Steuereinheit (40) angepasst ist, um abzuleiten, dass der erste Temperaturzustand (Tin, Tamb) einen niedrigen Temperaturbereich angibt.

12. Vorrichtung nach einem der Ansprüche 8 bis 11 oder Verfahren nach einem der Ansprüche 1 bis 7, 10 oder 11, wobei die zweite Temperatureinheit (46, 48) gebildet wird durch
einen oder den ersten Temperatursensor (46), der am Behandlungskammereinlass (26) angeordnet ist, und
einen zweiten Temperatursensor (48), der am Behandlungskammerauslass (24) angeordnet ist, und
wobei der zweite Temperaturzustand (deltaT), der die Vorrichtungsbetriebstemperatur angibt, von den Temperaturen (Tin, Tout), die durch den ersten und den zweiten Sensor (46, 48) detektiert werden, abhängig ist.

13. Vorrichtung nach Anspruch 12 oder Verfahren nach Anspruch 12, wobei bei dem Verfahren abgeleitet wird oder die Steuereinheit (40) angepasst ist, um abzuleiten, dass die Vorrichtungsbetriebstemperatur
niedrig oder kalt ist, wenn der zweite Temperaturzustand (deltaT) unter oder gleich einem vorbestimmten Wert (T1) ist, und
hoch oder heiß ist, wenn der zweite Temperaturzustand (deltaT) über dem vorbestimmten Wert (T1) ist.

14. Vorrichtung nach einem der Ansprüche 8 bis 13 oder Verfahren nach einem der Ansprüche 1 bis 7 oder 10 bis 13, wobei die Entscheidung zur Verwendung der ersten oder der zweiten Wäschetrockenheitssteuerroutine (LP, TTE) durch Bezug auf eine Lookup-Tabelle unter Verwendung des ersten und des zweiten Temperaturzustands (Tin, Tamb; deltaT) bei dem Verfahren oder durch die Steuereinheit (40) abgefragt wird, die zu einem derartigen Abfragen dieser Entscheidung angepasst ist.

15. Vorrichtung nach einem der Ansprüche 8 bis 14 oder Verfahren nach einem der Ansprüche 1 bis 7 oder 10 bis 14, wobei eine Vortrocknungssubroutine vor dem Starten der Trocknungssubroutine während des Trocknungsvorgangs in Abhängigkeit vom ersten und/oder vom zweiten Temperaturzustand (Tin, Tamb; deltaT) bei dem Verfahren modifiziert oder durch die Steuereinheit (40) modifiziert oder aktiviert/deaktiviert wird, die zu einem derartigen Modifizieren oder Aktivieren/Deaktivieren angepasst ist.

16. Vorrichtung nach einem der Ansprüche 8 bis 15 oder Verfahren nach einem der Ansprüche 1 bis 7 oder 10 bis 15, wobei das Verfahren oder die Steuereinheit (40) angepasst ist, um
den zweiten Temperaturzustand (deltaT) zuerst zu detektieren und,
falls der zweite Temperaturzustand (deltaT) unter einem vorbestimmten Bereich oder unter einem vorbestimmten Wert (T1) ist, dann den ersten Temperaturzustand (Tin, Tamb), der die aktuelle Umgebungstemperatur angibt, zu detektieren oder zu bewerten und,
falls der zweite Temperaturzustand (deltaT) über dem vorbestimmten Bereich oder über dem vorbestimmten Wert (T1) ist, den letzten detektierten ersten Temperaturzustand (Tin*) zu verwenden, der zu einer Zeit detektiert worden ist, zu der der zweite Temperaturzustand (Tin, Tamb) angegeben hat, dass der zweite Temperaturzustand (deltaT) unter dem vorbestimmten Bereich oder unter dem vorbestimmten Wert (T1) war.

17. Vorrichtung nach einem der Ansprüche 8 bis 16 oder Verfahren nach einem der Ansprüche 1 bis 7 oder 10 bis 16,
wobei die erste und/oder die zweite Wäschetrockenheitssteuerroutine eine Trocknungssubroutine und eine oder die Vortrocknungssubroutine umfasst, bei der es sich um eine Schleuderroutine handelt, die der Trocknungssubroutine vorausgeht,
wobei die Vortrocknungssubroutine nicht ausgeführt oder mit einer geringeren Schleuderdrehzahl ausgeführt wird, wenn der zweite Temperaturzustand (deltaT) angibt, dass die Vorrichtungsbetriebstemperatur über einem vorbestimmten Bereich oder über einem vorbestimmten Wert (T1) ist.

18. Vorrichtung nach einem der Ansprüche 8 bis 17 oder Verfahren nach einem der Ansprüche 1 bis 7 oder 10 bis 17,
wobei die Wäschetrocknungsvorrichtung (2) eine Art einer Wärmepumpe oder ein Trockner oder Waschtrockner in Verflüssigerart ist, und/oder
wobei die Wäschetrocknungsvorrichtung (2) eine Vorrichtung in Tumbler-Art mit einer Trommel (28) ist, die um eine horizontale Achse oder eine zu einer horizontalen Ebene schräge Achse drehbar ist.

19. Vorrichtung nach einem der Ansprüche 8 bis 18 oder Verfahren nach einem der Ansprüche 1 bis 7 oder 10 bis 18, wobei die Behandlungskammer (22, 28) ein Behälter (22), in dem eine drehbare Trommel (28) angeordnet ist, oder eine drehbare Trommel (28) ist.

## Revendications

1. Procédé de contrôle d'un processus de séchage dans un appareil de séchage de linge (2), en particulier dans un sèche-linge ou dans une machine à laver séchante, l'appareil de séchage de linge (2) comprenant :
une armoire (4) qui renferme les composants de l'appareil de séchage ;
une chambre de traitement de linge (22, 28) pour le séchage du linge ;
un agencement de circuit d'air de processus (20, 22) pour la circulation de l'air de processus dans la chambre de traitement (22, 28), l'air de processus étant guidé dans un canal d'air de processus (20) d'une sortie de chambre de traitement (24) à une entrée de chambre de traitement (26) de sorte que la chambre de traitement (22, 28) et le canal d'air de processus (20) forment une boucle d'air de processus ;
une première unité de détection de température (46, 50) conçue pour détecter un premier état de température (Tin, Tamb) révélateur de la température ambiante autour de l'appareil de séchage de linge (2) ou de l'armoire d'appareil de séchage (4) ; et
une seconde unité de détection de température (46, 48) conçue pour détecter un second état de température (deltaT) révélateur de la température de fonctionnement de l'appareil de séchage de linge (2) ;
le procédé étant **caractérisé par** les étapes consistant à :
détecter les premier et second états de température (Tin, Tamb ; deltaT) ;
sélectionner un premier programme de contrôle de séchage de linge (LP) ou un second programme de contrôle de séchage (TTE) en fonction des premier et second états de température détectés (Tin, Tamb ; deltaT) ; et
sécher le linge dans la chambre de traitement (22, 28) selon le programme sélectionné parmi les premier et second programmes de contrôle de séchage de linge,
un premier paramètre de fonctionnement ou un premier jeu de paramètres de fonctionnement utilisé pour contrôler le séchage du linge selon le premier programme de contrôle de séchage de linge (LP) étant différent d'un second paramètre de fonctionnement ou d'un second jeu de paramètres de fonctionnement utilisé pour contrôler le séchage du linge selon le second programme de contrôle de séchage de linge (TTE).

2. Procédé selon la revendication 1, dans lequel le premier programme de contrôle de séchage de linge (LP) repose, en totalité, partiellement ou essentiellement, sur une humidité de linge détectée ou sur une humidité de linge estimée ou sur un paramètre (LP) révélateur d'une humidité de linge estimée.

3. Procédé selon la revendication 2, dans lequel l'humidité de linge ou le paramètre révélateur d'humidité (LP) est estimé(e) sur la base de paramètres de fonctionnement électriques détectés au niveau de composants de l'appareil de séchage de linge (2) et/ou de températures détectées au niveau de composants de l'appareil de séchage de linge (2).

4. Procédé selon la revendication 1, 2 ou 3, dans lequel le second programme de contrôle de séchage de linge (TTE) repose, en totalité, partiellement ou essentiellement, sur une durée de fonctionnement écoulée en guise de second paramètre de fonctionnement.

5. Procédé selon l'une quelconque des revendications précédentes, dans lequel dans le second programme de contrôle de séchage de linge (TTE), un temps de séchage est estimé au début ou pendant une période initiale du cycle de séchage, et un second paramètre de fonctionnement est le temps écoulé depuis le temps de séchage estimé.

6. Procédé selon la revendication 5, dans lequel le temps de séchage estimé est estimé sur la base d'un ou plusieurs des paramètres suivants :
les paramètres de fonctionnement électriques détectés au niveau de composants de l'appareil de séchage ;
les températures détectées au niveau de l'appareil de séchage ; et
la puissance latente (LP) de l'appareil.

7. Procédé selon la revendication 3 ou 6, dans lequel les paramètres de fonctionnement électriques permettant d'estimer l'humidité du linge sont un ou plusieurs des paramètres suivants ou la puissance latente (LP) est déterminée sur la base d'un ou plusieurs des paramètres suivants :
le courant et/ou la tension et/ou le couple et/ou la consommation électrique du moteur (30) entraînant la chambre de traitement de linge (22, 28) ;
le courant et/ou la tension et/ou le couple et/ou la consommation électrique du moteur entraînant le ventilateur (18) pour faire circuler l'air de processus ;
le courant et/ou la tension et/ou le couple et/ou la consommation électrique du moteur entraînant le ventilateur (15) pour faire circuler l'air de refroidissement ;
la puissance consommée par un chauffage pour chauffer l'air de processus ; et
le courant et/ou la tension et/ou le couple et/ou la consommation électrique du moteur entraînant le compresseur (14) d'un système à pompe de chaleur (6).

8. Appareil de séchage de linge (2), en particulier dans un sèche-linge ou dans une machine à laver séchante, l'appareil de séchage de linge (2) comprenant :
une armoire (4) qui renferme les composants de l'appareil de séchage ;
une chambre de traitement de linge (22, 28) pour le séchage du linge ;
un agencement de circuit d'air de processus (20, 22) pour la circulation de l'air de processus dans la chambre de traitement (22, 28), l'air de processus étant guidé dans un canal d'air de processus (20) d'une sortie de chambre de traitement (24) à une entrée de chambre de traitement (26) de sorte que la chambre de traitement (22, 28) et le canal d'air de processus (20) forment une boucle d'air de processus ;
une première unité de détection de température (46, 50) conçue pour détecter un premier état de température (Tin, Tamb) révélateur de la température ambiante autour de l'appareil de séchage ou de l'armoire d'appareil de séchage (4) ;
une seconde unité de détection de température (46, 48) conçue pour détecter un second état de température (deltaT) révélateur de la température de fonctionnement de l'appareil de séchage de linge (2) ; et
une unité de contrôle (40) conçue pour contrôler au moins une opération de séchage de l'appareil de séchage de linge (2), en particulier en appliquant un procédé de contrôle selon l'une quelconque des revendications précédentes,
l'unité de contrôle (40) étant **caractérisée en ce qu'**elle est conçue pour :
détecter le premier état de température (Tin, Tamb) et le second état de température (deltaT) ;
sélectionner un premier programme de contrôle de séchage de linge (puissance latente) ou un second programme de contrôle de séchage (TTE) en fonction des premier et second états de température détectés (Tin, Tamb ; deltaT) ; et
exécuter le programme sélectionné parmi les premier et second programmes de contrôle de séchage de linge (LP, TTE).

9. Appareil selon la revendication 8, dans lequel un premier paramètre de fonctionnement ou un premier jeu de paramètres de fonctionnement utilisé pour contrôler le séchage du linge selon le premier programme de contrôle de séchage de linge (LP) est différent d'un second paramètre de fonctionnement ou d'un second jeu de paramètres de fonctionnement utilisé pour contrôler le séchage du linge selon le second programme de contrôle de séchage de linge (TTE).

10. Appareil selon la revendication 8 ou 9 ou procédé selon l'une quelconque des revendications 1 à 7, dans lequel la première unité de température (46, 50) est ou comprend un premier capteur de température (46) disposé au niveau de l'entrée de chambre de traitement (26).

11. Appareil selon la revendication 8, 9 ou 10 ou procédé selon l'une quelconque des revendications 1 à 7 ou 10, dans lequel quand le premier état de température (Tin, Tamb) détecté par la première unité de détection de température (46, 50)
est dans une plage de températures prédéterminée, le procédé conclut ou l'unité de contrôle (40) est conçue pour conclure que le premier état de température (Tin, Tamb) indique une plage de températures ambiantes normales ;
est supérieur à la plage prédéterminée, le procédé conclut ou l'unité de contrôle (40) est conçue pour conclure que le premier état de température (Tin, Tamb) indique une plage de températures ambiantes élevées ;
est inférieur à la plage de températures prédéterminée, le procédé conclut ou l'unité de contrôle (40) est conçue pour conclure que le premier état de température (Tin, Tamb) indique une plage de températures ambiantes faibles.

12. Appareil selon l'une quelconque des revendications 8 à 11 ou procédé selon l'une quelconque des revendications 1 à 7, 10 ou 11, dans lequel la seconde unité de température (46, 48) est formée par
un ou le premier capteur de température (46) disposé au niveau de l'entrée de chambre de traitement (26) ; et
un second capteur de température (48) disposé au niveau de la sortie de chambre de traitement (24) ;
le second état de température (deltaT) révélateur de la température de fonctionnement de l'appareil étant fonction des températures (Tin, Tout) détectées par les premier et second capteurs (46, 48).

13. Appareil selon la revendication 12 ou procédé selon la revendication 12, le procédé concluant ou l'unité de contrôle (40) étant conçue pour conclure que la température de fonctionnement de l'appareil
est faible ou froide, quand le second état de température (deltaT) est inférieur ou égal à une valeur prédéterminée (T1) ; et
est élevée ou chaude, quand le second état de température (deltaT) est supérieur à la valeur prédéterminée (T1).

14. Appareil selon l'une quelconque des revendications 8 à 13 ou procédé selon l'une quelconque des revendications 1 à 7 ou 10 à 13, le procédé récupérant ou l'unité de contrôle (40) étant conçue pour récupérer la décision d'utiliser le premier ou le second programme de contrôle de séchage de linge (LP, TTE) en référence à une table de référence utilisant les premier et second états de température (Tin, Tamb ; deltaT).

15. Appareil selon l'une quelconque des revendications 8 à 14 ou procédé selon l'une quelconque des revendications 1 à 7 ou 10 à 14, le procédé modifiant ou l'unité de contrôle (40) étant conçue pour modifier ou pour activer/désactiver un sous-programme de pré-séchage avant le début du sous-programme de séchage pendant l'opération de séchage en fonction du premier et/ou du second état de température (Tin, Tamb ; deltaT).

16. Appareil selon l'une quelconque des revendications 8 à 15 ou procédé selon l'une quelconque des revendications 1 à 7 ou 10 à 15, le procédé ou l'unité de contrôle (40) étant conçu(e) pour
détecter d'abord le second état de température (deltaT) ; et
si le second état de température (deltaT) est inférieur à une plage prédéterminée ou inférieur à une valeur prédéterminée (T1), détecter ou évaluer alors le premier état de température (Tin, Tamb) révélateur de la température ambiante présente ; et
si le second état de température (deltaT) est supérieur à la plage prédéterminée ou supérieur à la valeur prédéterminée (T1), utiliser le dernier premier état de température détecté (Tin*) détecté lorsque le second état de température (Tin, Tamb) indiquait que le second état de température (deltaT) était inférieur à la plage prédéterminée ou inférieur à la valeur prédéterminée (T1).

17. Appareil selon l'une quelconque des revendications 8 à 16 ou procédé selon l'une quelconque des revendications 1 à 7 ou 10 à 16,
dans lequel le premier et/ou le second programme de contrôle de séchage de linge comprennent un sous-programme de séchage et un ou le sous-programme de pré-séchage étant un programme d'essorage précédant le sous-programme de séchage ;
dans lequel le sous-programme de pré-séchage n'est pas exécuté ou est exécuté avec une vitesse d'essorage réduite, quand le second état de température (deltaT) indique que la température de fonctionnement de l'appareil est supérieure à une plage prédéterminée ou supérieure à une valeur prédéterminée (T1).

18. Appareil selon l'une quelconque des revendications 8 à 17 ou procédé selon l'une quelconque des revendications 1 à 7 ou 10 à 17,
dans lequel l'appareil de séchage de linge (2) est un sèche-linge ou une machine à laver séchante de type à pompe de chaleur ou de type à condenseur ; et/ou
dans lequel l'appareil de séchage de linge (2) est un appareil de type par culbutage comprenant un tambour (28) rotatif autour d'un axe horizontal ou d'un axe incliné par rapport à un plan horizontal.

19. Appareil selon l'une quelconque des revendications 8 à 18 ou procédé selon l'une quelconque des revendications 1 à 7 ou 10 à 18, dans lequel la chambre de traitement (22, 28) est une cuve (22) dans laquelle un tambour rotatif (28) est disposé ou est un tambour rotatif (28).
